(19) Europäisches Patentamt
European Patent Office
Office européen des brevets

(11) **EP 2 398 197 A1**

(12) **EUROPEAN PATENT APPLICATION**

(43) Date of publication:
**21.12.2011 Bulletin 2011/51**

(51) Int Cl.:
***H04L 12/56*** *(2006.01)*

(21) Application number: **11007592.6**

(22) Date of filing: **23.04.2008**

<table>
<tr><td>

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **24.04.2007 US 739548**

(62) Document number(s) of the earlier application(s) in accordance with Art. 76 EPC:
**08746719.7 / 2 140 635**

(71) Applicant: **Qualcomm Incorporated**
**San Diego, CA 92121-1714 (US)**

(72) Inventors:
• **Kapoor, Rohit**
**San Diego**
**California 92121 (US)**

</td><td>

• **Spindola, Serafin Diaz**
**San Diego**
**California 92121 (US)**

(74) Representative: **Carstens, Dirk Wilhelm**
**Wagner & Geyer**
**Gewürzmühlstrasse 5**
**80538 München (DE)**

<u>Remarks:</u>
This application was filed on 16-09-2011 as a divisional application to the application mentioned under INID code 62.

</td></tr>
</table>

(54) **Method and apparatus for modifying playback timing of talkspurts within a sentence without affecting intelligibility**

(57) Adaptive De-Jitter Buffer for Voice over IP (VoIP) for packet switched communications. The de-jitter buffer methods and apparatus presented modify the playback of packets dependent upon whether silence periods are detected inter-sentence or intra-sentence to optimize voice quality in a communication system. In one example, a de-jitter buffer determines the length of at least one silence period associated with a plurality of received packets and determines a time to transmit a portion of the packets based on the determined length of the silence period. In another example, a silence characterizer unit performs this function.

EP 2 398 197 A1

**Description**

**BACKGROUND**

**Field**

The present invention relates to wireless communication systems, and specifically to playback of packets in an adaptive de-jitter buffer for voice over internet protocol (VoIP) for packet switched communications.

**Background**

In a communication system, the end-to-end delay of a packet may be defined as the time from its generation at the source to when the packet reaches its destination. In a packet-switched communication system, the delay for packets to travel from source to destination may vary depending upon various operating conditions, including but not limited to, channel conditions and network loading. Channel conditions refer to the quality of the wireless link.

The end-to-end delay of a packet includes delays introduced in the network and the various elements through which the packet passes. Many factors contribute to end-to-end delay. Variance in the end-to-end delay is referred to as jitter. Factors such as jitter lead to degradation in the quality of communication. A de-jitter buffer may be implemented to correct for jitter and improve overall quality in a communication system.

**BRIEF DESCRIPTION OF THE DRAWINGS**

FIG. 1 is a block diagram of a communication system, wherein an Access Terminal includes an adaptive de-jitter buffer;

FIG. 2 illustrates an example of a de-jitter buffer;

FIG. 3 illustrates de-jitter buffer delay in one example;

FIG. 4 is a timing diagram illustrating examples: i) compression of a silence portion of a speech segment; and ii) expansion of a silence portion of a speech segment;

FIG. 5 illustrates a segment of speech having talkspurts and periods of silence;

FIG. 6 illustrates an example of compression and expansion of a silence period in a short sentence;

FIG. 7 illustrates consecutive packets with RTP timestamps;

FIG. 8A illustrates an example of the disclosed method;

FIG. 8B illustrates another example of the disclosed method;

FIG. 8C illustrates another example of the disclosed method;

FIG. 9 illustrates a flowchart of an example of the disclosed method and apparatus;

FIG. 10 is a block diagram of a communication system, wherein an access terminal (AT) includes an adaptive de-jitter buffer and a silence characterizer unit;

FIG. 11 is a block diagram of a portion of a receiver in a communication system incorporating an example of the disclosed method and apparatus;

FIG. 12 is a block diagram illustrating a communication system according to one example, including an adaptive de-jitter buffer and silence characterizer unit; and

FIG. 13 illustrates a flowchart of an example of the disclosed method and apparatus.

**DETAILED DESCRIPTION**

Generally, speech consists of sentences having periods of talkspurts and periods of silence. Individual sentences are separated by periods of silence, and in turn, a sentence may comprise multiple talkspurts separated by periods of silence. Sentences may be long or short, and the silence periods within sentences (or "intra-sentence") may typically be shorter than periods of silence separating sentences. As used herein, a talkspurt is generally made up of multiple packets of data. In many services and applications, e.g., voice over IP (VoIP), video telephony, interactive games, messaging, etc., data is formed into packets and routed through a network.

Generally, in wireless communication systems, channel conditions, network load, quality of service (QoS) capabilities of a system, the competition for resources by different flows, among other factors, impact the end-to-end delay of packets in a network. The end-to-end delay of packets may be defmed as the time it takes a packet to travel within a network from a "sender" to a "receiver." Each packet may incur a unique source to destination delay, resulting in a condition generally referred to as "jitter." If a receiver fails to correct for jitter, a received message will suffer distortion when the packets are re-assembled. When packets arriving at a receiver fail to arrive at regular intervals, a de-jitter buffer may be used to adjust for the irregularity of incoming data. The de-jitter buffer smooths the jitter experienced by packets and conceals the variation in packet arrival time at the receiver. In some systems this smoothing effect is achieved using an adaptive de-jitter buffer to delay the playback of a first packet of each talkspurt. The "de-jitter delay" may be calculated using an algorithm, or may be equal to the time it takes to receive voice data equal to the length of the de-jitter buffer delay.

Channel conditions, and thus jitter may vary and the delay of a de-jitter buffer may change from talkspurt to talkspurt to adapt to these changing conditions. While adapting the de-jitter delay, packets (representing both speech and silence) may be expanded or compressed, in a method referred to herein as "time-warping." The perceived voice quality of communication may not be affected when speech packets are time-warped. However, in certain scenarios, when time-warping is applied to silence periods, voice quality may appear degraded. Thus, it is an objective of the present invention to provide a method and an apparatus for modifying the playback timing of talkspurts within a sentence without affecting intelligibility.

The following discussion is applicable to packetized communications, and in particular, details a voice communication, wherein the data, or speech and silence, originate at a source and are transmitted to a destination for playback. Speech communication is an example of application of the present discussion. Other applications may include video communications, gaming communications, or other communications having characteristics, specifications and/or requirements similar to those of speech communications. For clarity the following discussion describes a spread-spectrum communication system supporting packet data communications including, but not limited to code division multiple access (CDMA) systems, orthogonal frequency division multiple access (OFDMA), wideband code division multiple access (W-CDMA), global systems for mobile communications (GSM) systems, systems supporting IEEE standards, such as 802.11 (A,B,G), 802.16, WiMAX etc.

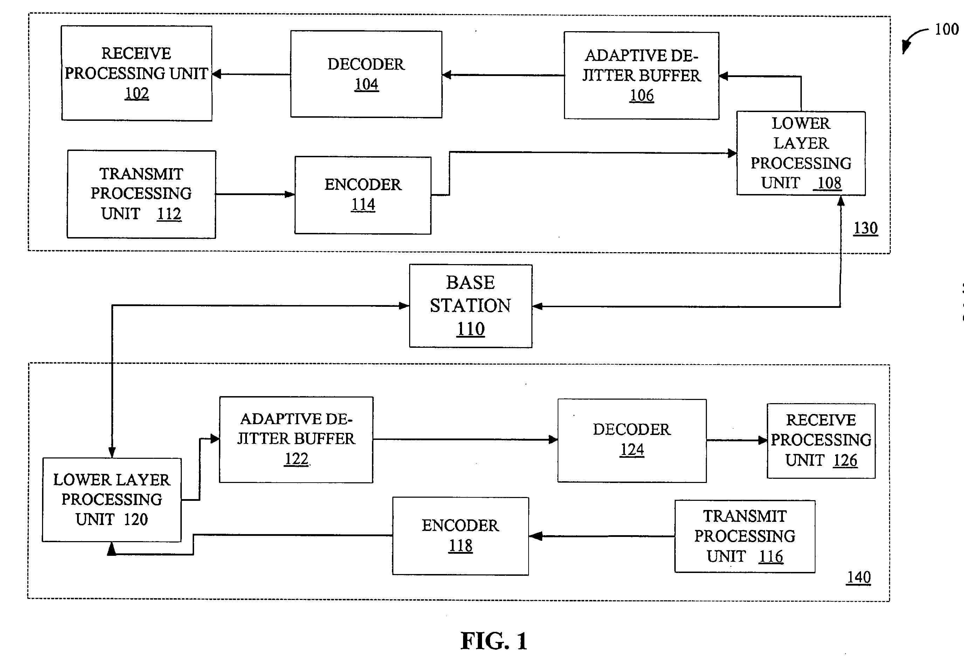

FIG. 1 is a block diagram illustrating a digital communication system 100. Two access terminals (ATs) 130 and 140 communicate via base station (BS) 110. Within AT 130, transmit processing unit 112 transmits voice data to an encoder 114, which encodes and packetizes the voice data and sends the packetized data to lower layer processing unit 108. For transmission, data is then sent to BS 110. BS 110 processes the received data and transmits the data to AT 140, wherein the data is received at lower layer processing unit 120. The data is then provided to de-jitter buffer 122, which stores the data so as to conceal or reduce the impact of jitter. The data is sent from the de-jitter buffer 122 to decoder 124, and on to receive processing unit 126.

For transmission from AT 140, data/voice is provided from transmit processing unit 116 to encoder 118. Lower layer processing unit 120 processes the data for transmission to BS 110. For receipt of data from BS 110 at AT 130, data is received at lower layer processing unit 108. Packets of data are then sent to a de-jitter buffer 106, where they are stored until a required buffer length or delay is reached. Once this length or delay is attained, the de-jitter buffer 106 begins to send data to a decoder 104. The decoder 104 converts the packetized data to sampled voice and sends the packets to receive processing unit 102. In the present example, the behavior of AT 130 is analogous to AT 140.

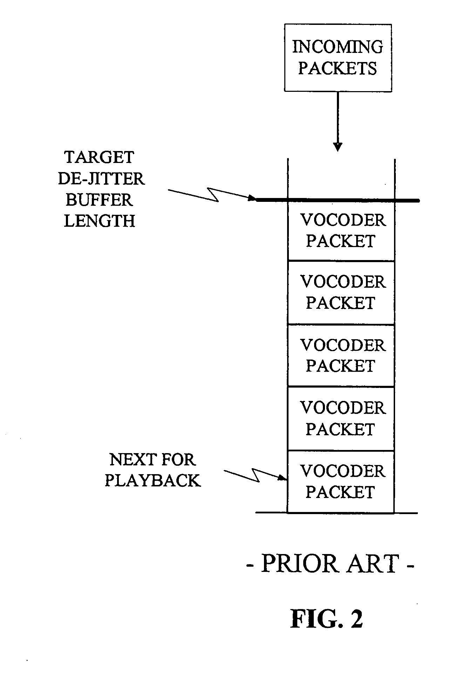

A storage or de-jitter buffer is used in ATs, such as the ones described above, to conceal the effects of jitter. FIG. 2 illustrates one example of a de-jitter buffer. Incoming encoded packets are accumulated and stored in the buffer. In one example, the buffer is a first in, first out (FIFO) buffer, wherein data is received in a particular order and processed in that same order; the first data processed is the first data received. In another example, the de-jitter buffer is an ordered list that keeps track of which packet is the next to process.

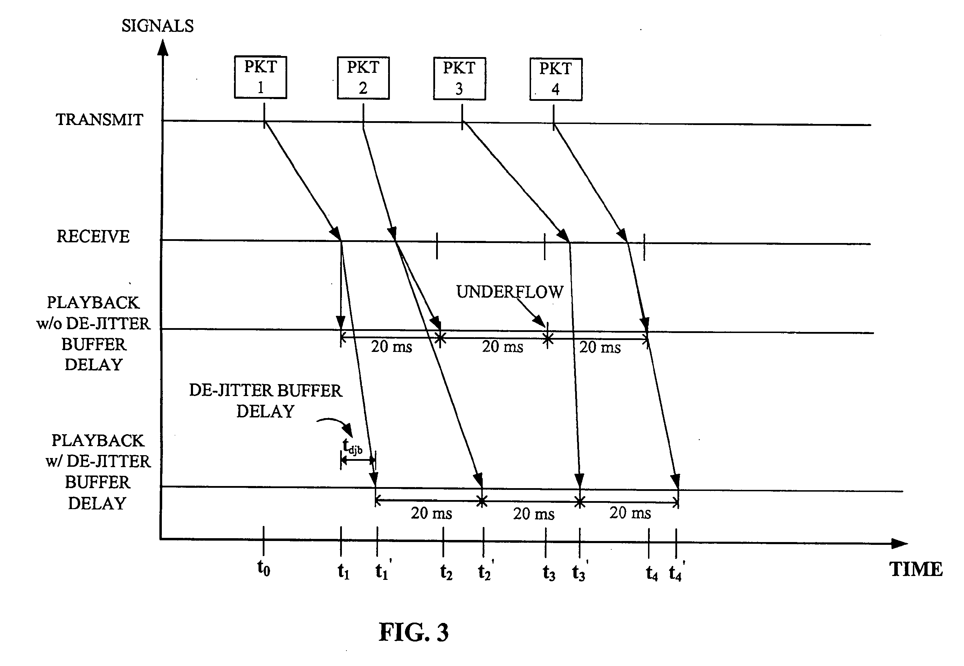

FIG. 3 illustrates transmission, receipt, and playback timelines for packets in various scenarios. The first packet, PKT 1, is transmitted at time to and is played back upon receipt at time $t_1$. Subsequent packets, PKT 2, PKT 3, and PKT 4, are transmitted at 20 ms intervals after PKT 1. In the absence of time warping, decoders playback packets at regular time intervals (e.g., 20 ms), from the first packet's playback time. For instance, if a decoder plays back packets at regular 20 ms intervals, a first received packet is played back at time $t_1$, and subsequent packets will be played back 20 ms after time $t_1$, 40 ms after time $t_1$, 60 ms after time $t_1$, etc. As illustrated in FIG. 3, the anticipated playback time (without de-jitter buffer delay) of PKT 2 is $t_2 = t_1 + 20$ ms. Here, PKT 2 is received before its anticipated playback time, $t_2$. Packet 3, on the other hand, is received after its anticipated playback time $t_3 = t_2 + 20$ ms. This condition is referred to as an underflow. An underflow occurs when the playback utility is ready to play a packet, but the packet is not present in the de-jitter buffer. Underflows typically cause the decoder to produce erasures and degrade playback quality.

FIG. 3 further illustrates a second scenario, in which the de-jitter buffer introduces a delay, $t_{djb}$ before the playback of the first packet. In this scenario, the de-jitter buffer delay is added to enable the playback utility to receive packets (or samples) every 20 msec. In this scenario, even though PKT 3 is received after its anticipated playback time, $t_3$, the addition of the de-jitter buffer delay allows PKT 3 to be played 20 ms after playback of PKT 2. PKT 1 is sent at time $t_0$, received at time $t_1$ and instead of being played back at time $t_1$, as was done previously, is now played back at time $t_1 + t_{djb} = t_1$'. The playback utility plays PKT 2 at a predetermined interval, e.g. 20 ms, after PKT 1 or at time $t_2$' = $t_1 + t_{djb} + 20 = t_2 + t_{djb}$ and PKT 3 at time $t_3$' = $t_3 + t_{djb}$. The delaying of the playback by $t_{djb}$ allows the third packet to be played out without an underflow being caused. Thus, as illustrated in FIG. 3, introduction of the de-jitter buffer delay may reduce underflows and prevent speech quality from being degraded.

In one example, the de-jitter buffer has an adaptive buffer memory and uses speech time warping to enhance its ability to track variable delay and jitter. In this example, the processing of the de-jitter buffer is coordinated with that of the decoder, wherein the de-jitter buffer identifies an opportunity or need to time-warp the packets and instructs the decoder to time-warp the packets. The decoder time-warps the packets by compressing or expanding the packets, as instructed by the de-jitter buffer. An adaptive de-jitter buffer discussed further in co-pending U.S. Application No. 11/215,931, entitled "METHOD AND APPARATUS FOR AN ADAPTIVE DE-JITTER BUFFER," filed August 30, 2005 and assigned to the assignee of the present disclosure. The adaptive de-jitter buffer may be a memory storage unit, wherein the status of the de-jitter buffer is a measure of the data (or the number of packets) stored in the adaptive de-jitter buffer. The data processed by the de-jitter buffer may be sent to a decoder or other utility from the de-jitter buffer. The encoded packets may correspond to a fixed amount of speech data, e.g., 20 msec corresponding to 160 samples of speech data, at 8 kHz sampling rate.

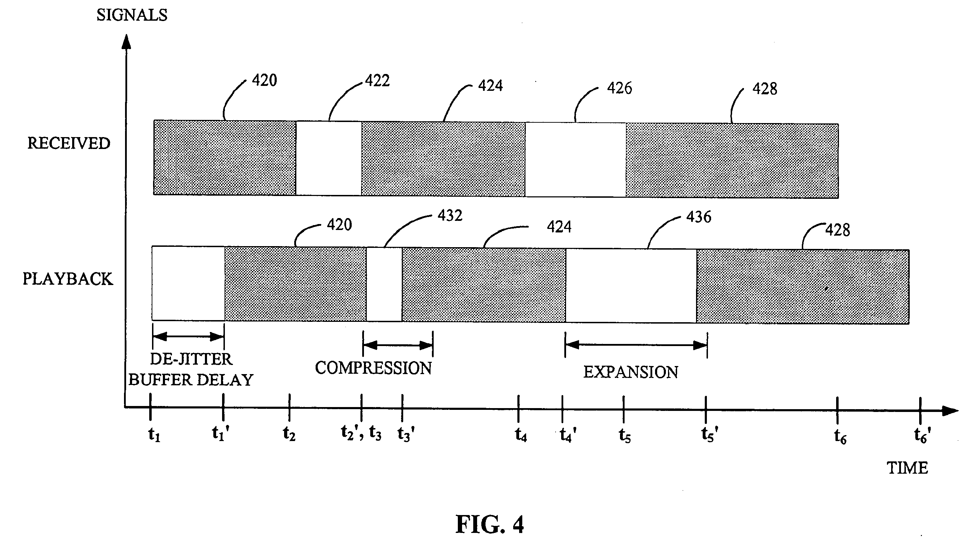

FIG. 4 illustrates examples of "silence compression" and "silence expansion" due to differences in de-jitter delay from one talkspurt to another. In FIG. 4, the shaded regions 420, 424 and 428 represent talkspurts, while unshaded regions 422 and 426 represent silence periods of the received information. As received, talkspurt 420 begins at time $t_1$ and ends at time $t_2$. At the receiver, de-jitter buffer delay is introduced and therefore playback of talkspurt 420 begins at time $t_1'$. The de-jitter buffer delay is identified as the difference between time $t_1'$ and time $t_1$. As received, silence period 422 begins at time $t_2$ and ends at time $t_3$. The silence period 422 is compressed and played back as silence period 432 from time $t_2'$ to $t_3'$, which is less than the original time duration of the received silence period 422. Talkspurt 424 begins at time $t_3$ and ends at time $t_4$ at the source. Talkspurt 424 is played back at the receiver from time $t_3'$ to time $t_4'$. Silence period 426 (time $t_4$ to $t_5$) is expanded at the receiver on playback as silence period 436, wherein ($t_5' - t_4'$) is greater than ($t_5 - t_4$.) A silence period may be compressed when the de-jitter buffer needs to playback packets sooner and expanded when a de-jitter buffer needs to delay the playback of packets.

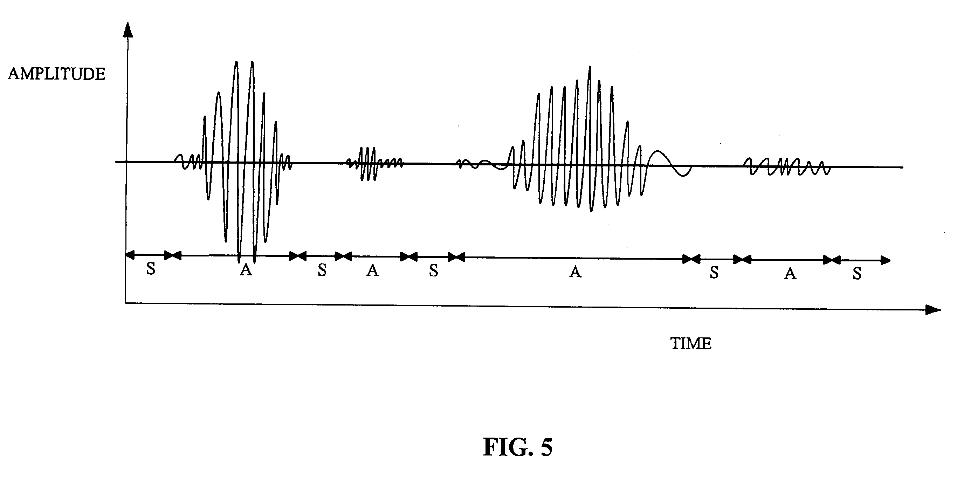

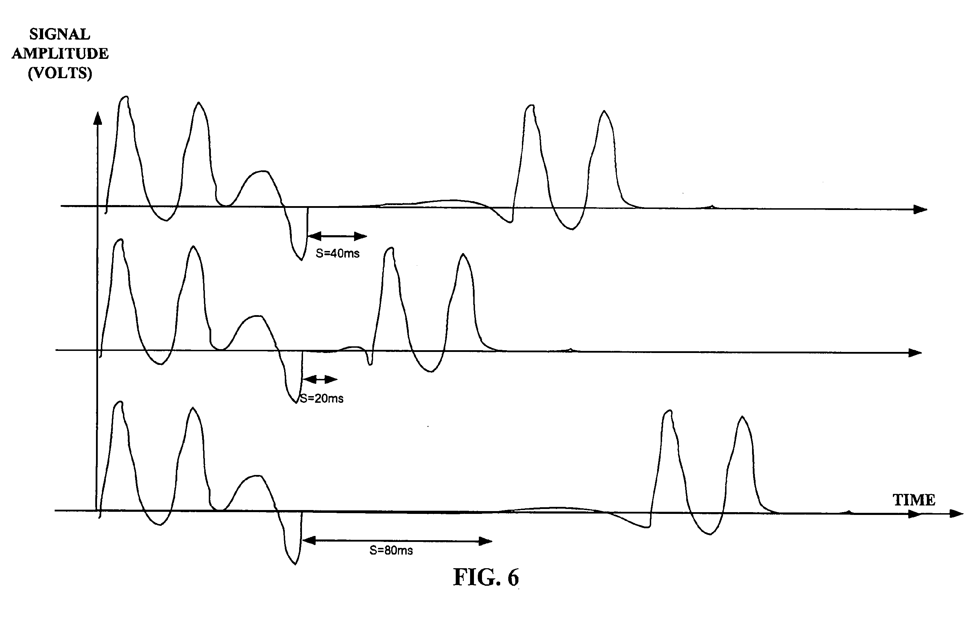

If a silence period consists of just a few frames, for instance when the silence period occurs within a sentence, voice quality may be affected by the expansion or compression of silence periods. FIG. 5 illustrates the break up of silence and speech frames for a multiple word sentence, e.g., "PRESS THE PANTS." In FIG. 5, "A" denotes active speech and "S" denotes silence. Here, the length of silence between talkspurts is short compared to the length of the speech portions. If the length of the silence period is compressed or expanded, the sentence may appear to be sped up or slowed down. This is further illustrated in FIG. 6. A sentence consisting of just one word, "CHINA" is shown. Assume a silence period occurs between "CHI" and "NA" and that the silence period was originally 40 msec at the transmitter. Here, if the silence is compressed at the receiver to 20 msec, the "I" sound may be distorted and result in an apparent speeding up of the word to "CH-NA." On the other hand, if the silence period is expanded to 80 msec, the "I" sound may appear over-emphasized, resulting in distortion or an apparent slowing down of the sentence e.g., to "CH-I-I-I-I-I-NA." Such distortions result in a perceived degradation in overall voice quality.

Since expansion or compression of short periods of silence may result in degradation, the length of the transmitted silence period may be maintained at the receiver. In one scenario, when intra-sentence silence periods are detected, such as the silence periods illustrated in FIGs. 5 and 6, the length of the transmitted silence may be determined and then maintained at the receiver. Therefore, one objective of the present disclosure is to determine when silence occurs within a sentence, or intra-sentence. In one example, sentences may be distinguished from each other based on the detection of the end of a sentence. When the end of a sentence is detected, it may be determined that the silence periods occurring prior to the end of the sentence, occur intra-sentence, and they are neither compressed nor expanded. It may be determined that a sentence is over if a certain number of consecutive silence packets are detected. For instance, a number of consecutive silence packets indicating the end of a sentence may be equal to 10. In another example, if the length of the transmitted silence period is determined to be less than a particular amount, e.g., 200 msec, it may be assumed the silence period occurs intra-sentence. In this scenario, if the detected silence is 200 msec long, a silence period of 200 msec is then maintained at the receiver. Neither compression nor expansion of silence will be performed by the adaptive de-jitter buffer. In an example, a silence compression or silence expansion trigger may be disabled when the detected length of the silence period is less than 200 msec, or at the end of a sentence. In contrast, when silence is detected between sentences ("inter-sentence"), the de-jitter buffer operates normally and may compress or expand silence packets detected during these intervals.

In another aspect of the present disclosure, the length of a silence period between talkspurts may be calculated using the difference in RTP timestamps between the last packet of a talkspurt and the first packet of the next talkspurt. The sequence number (SN) of a real-time transport protocol (RTP) packet increments by one for each transmitted packet. The SN is used by a receiver to restore packet sequence and to detect packet loss. The time stamp (TS) may reflect the sampling instant of a first octet in the RTP data packet. The sampling instant is derived from a clock that increments monotonically and linearly in time. In applications processing speech, the TS may be incremented by a constant delta that corresponds to the number of samples in each speech packet. For instance, an input device may receive speech packets having 160 sampling periods, thus TS is incremented by 160 for each packet.

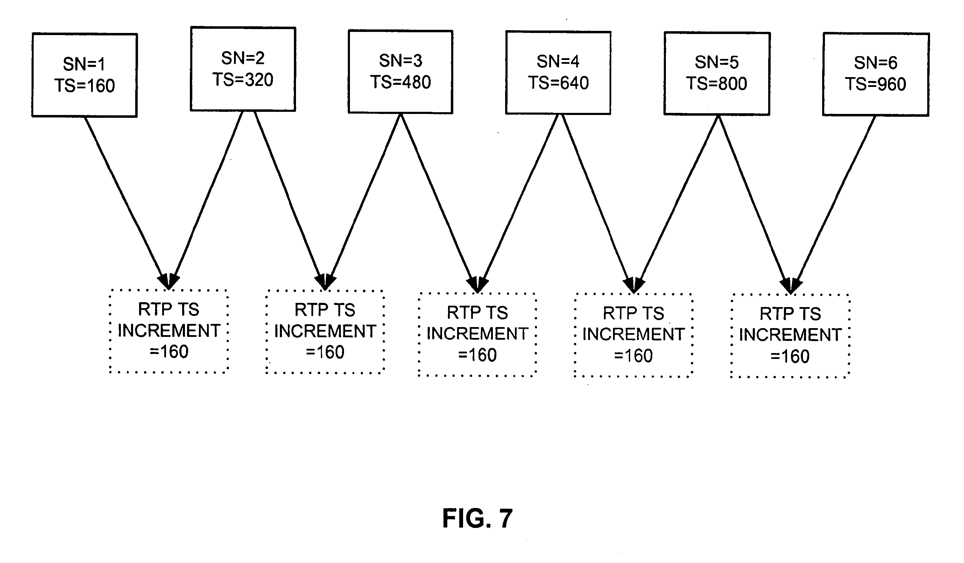

FIG. 7 illustrates a series of packets in a stream with consecutive SN and TS in increments of 160. The TS increment is the same, i.e., 160, whether the packet carries a segment of speech or represents a segment of silence.

For example, for an EVRC-like vocoder producing 20 msec frames with a sampling rate of 8 kHz, the RTP TS increases by 160 every 20 msec (8000*0.02 = 160 samples) for consecutive packets. As illustrated in FIG. 7, the RTP TS of the first packet is 160, RTP TS of the second packet is 320, RTP TS of the third packet is 480, etc. An example may be used to illustrate the determination of the length of a silence period between talkspurts. Assume the RTP timestamp of the last frame of a talkspurt is 3000 and the RTP timestamp of the first frame of the next talkspurt is 3640. This gives a difference in RTP TS ($\Delta$RTP) of 3640 minus 3000, which is equal to 640. Further, 640 corresponds to a silence period of length 20*(640/160) or 80 msec, for 20 msec frames at 8 kHz.

In another example, if the length of silence is too strictly maintained, a degree of freedom may be removed from the operation of the de-jitter buffer. A goal of a de-jitter buffer is to introduce an optimum delay in order to correct for jitter. This delay may be updated with changing channel conditions and in consideration of factors such as frame error rate, etc. If the length of silence is strictly maintained and a de-jitter buffer is designed to only adapt *between* sentences, inefficiencies may be introduced. For instance, during certain initial channel conditions, inter-sentence adaptation of the de-jitter buffer may prove sufficient. However, a sudden change in jitter conditions may result in the need to adapt between even short sentences. If this capability is disabled, the de-jitter buffer will not be able to adapt quickly enough to overall changing jitter conditions.

In order to operate the de-jitter buffer with a requisite degree of freedom while maintaining integrity of voice quality, an example of the disclosed invention aims to loosely maintain silence lengths between talkspurts occurring intra-sentence. To achieve this objective, the intra-sentence silence lengths may be adjusted by an amount calculated using an algorithm based on channel conditions, user input, etc. The resulting length of silence, although adjusted, approximates the length of the original silence in the voice source. In determining the adjusted length of silence, the effect of silence compression and silence expansion is taken into account. In certain scenarios, for instance, silence compression is more noticeable than silence expansion, therefore only expansion may be triggered. Another factor taken into consideration is the length of the original silence. For instance, when the original silence in the voice source is relatively longer, there is more flexibility in the amount of adjustment. For instance, if the original length of silence is 20 msec, expanding the silence by 40 msec at the receiver may be as noticeable. On the other hand, if the original length of silence is 100 msec, expanding the silence by 40 msec at the receiver may not be very noticeable. Assuming the original length of silence in the voice source is X sec, an example of the present disclosure maintains a silence spacing of:

$$[X\text{-}a,\ X\text{+}b],\ where\ \ a = MIN\ (0.2 * X,\ 0.02)\ sec,\ and\ b = MIN\ (0.4 * X,\ 0.04)\ sec$$

According to the one example, for the first talkspurt of each received sentence, the playback of the first packet may be delayed by $\Delta$, where $\Delta$ is equal to de-jitter buffer delay. For subsequent talkspurts of each sentence, the playback of the first packet may be delayed according to the example of the following algorithm:

Let *arrival_time* be the arrival time of the first packet. Let *depth_playout_time* be the time at which the first packet would have been played out if it were delayed by de-jitter buffer delay after its arrival. Also, let *spacing_playout_time (n)* be the time at which the first packet would have been played out if it maintained a spacing of n with the end of previous talkspurt. Let X be the actual spacing between the last packet of the previous talkspurt and the present packet. Let *actual_delay* denote the time at which the packet is played out. Then:

> *If (depth_playout_time < spacing_playout_time(X-a))*
>
> *actual_delay = spacing_playout_time(X-a)*           (a)
>
> *Else   If   (depth_playout_time   >=   spacing_playout_time(X-a)   AND depth_playout_time <= spacing_playout_time(X+b))*
>
> *actual_delay = depth_playout_time*           (b)
>
> *Else If (depth_playout_time > spacing_playout_time(X+b))*
>
> *actual_delay = MAX (arrival_ time, spacing_playout_time(X+b))*      (c)

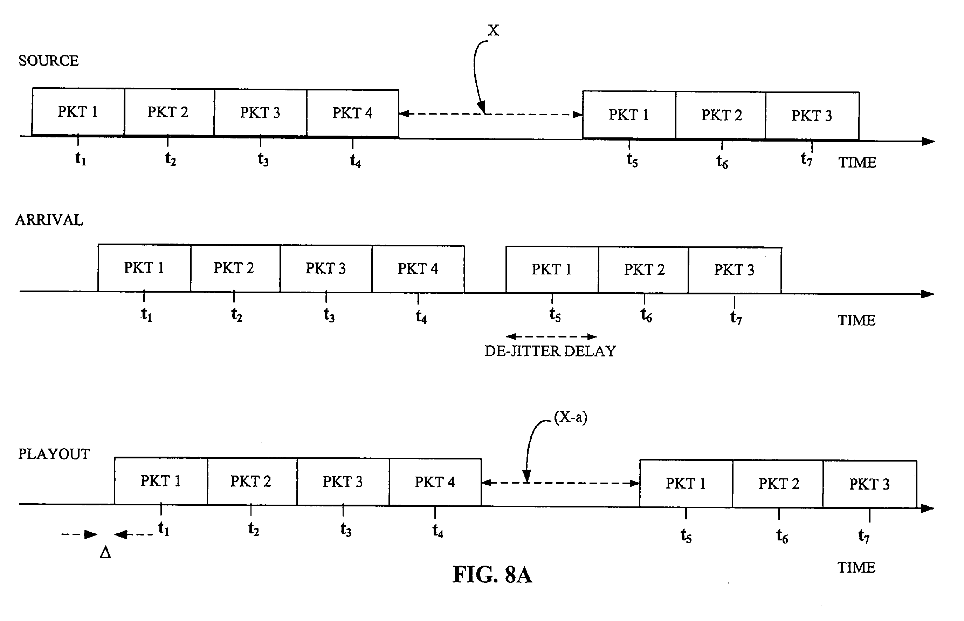

These conditions are illustrated in FIGs. 8A-8C. In FIG. 8A, playback of the first packet of the first talkspurt of the sentence is delayed by $\Delta$, where $\Delta$ is equal to the de-jitter buffer delay. For the next talkspurt of the sentence, if the time at which the first packet of the next talkspurt would have been played out if it were delayed by de-jitter buffer delay after its arrival is less than the time at which the first packet would have been played out if it maintained a spacing of *(X-a)* with the end of the previous talkspurt, then the time at which the packet is played out is equal to the value of *(X-a).*

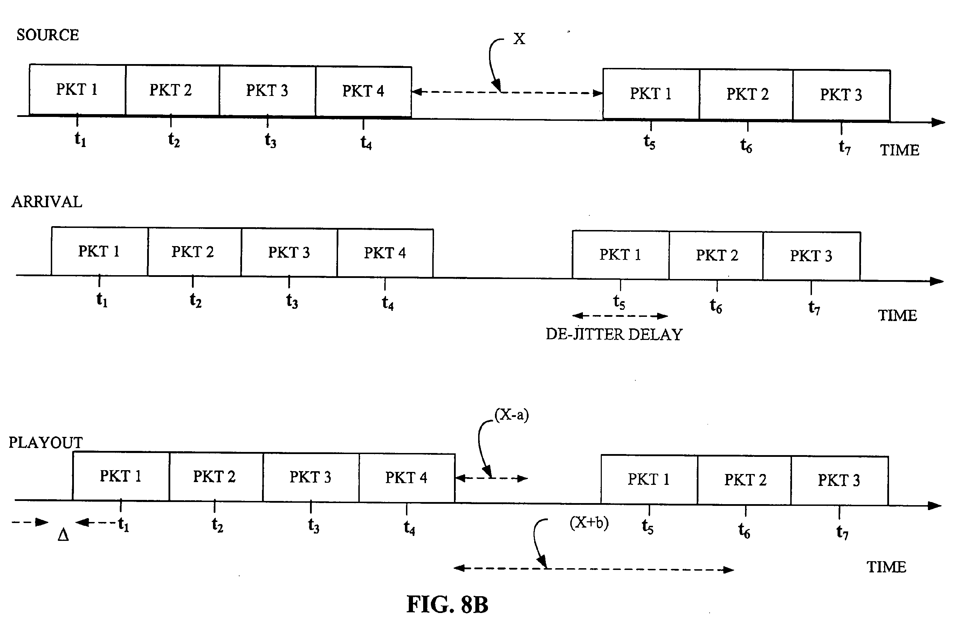

In FIG. 8B, playback of the first packet of the first talkspurt of the sentence is delayed by Δ, where Δ is equal to the de-jitter buffer delay. For the next talkspurt of the sentence, if the time at which the first packet of the next talkspurt would have been played out if it were delayed by de-jitter buffer delay after its arrival is greater than or equal to the time at which the first packet would have been played out if it maintained a spacing *of (X-a)* with the end of the previous talkspurt; and if the time at which the first packet of the next talkspurt would have been played out if it were delayed by de-jitter buffer delay after its arrival is less than or equal to the time at which the first packet would have been played out if it maintained a spacing of *(X+b),* then the time at which the packet is played out is equal to the value of the time at which the first packet would have been played out if it were delayed by de-jitter buffer delay after its arrival.

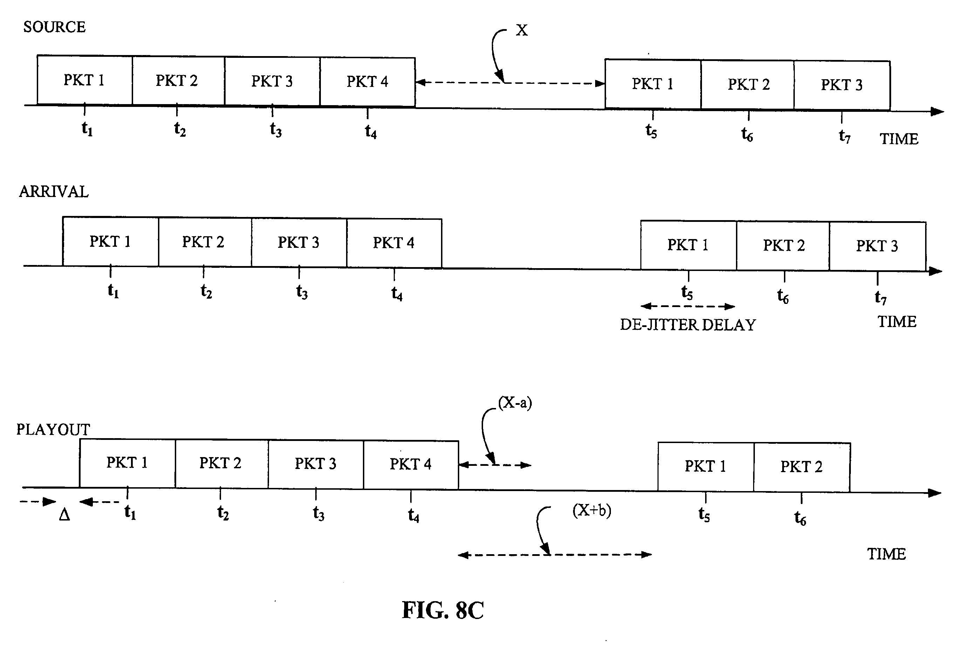

In FIG. 8C, playback of the first packet of the first talkspurt of the sentence is delayed by Δ, where Δ is equal to the de-jitter buffer delay. For the next talkspurt of the sentence, if the time at which the first packet of the next talkspurt would have been played out if it were delayed by de-jitter buffer delay after its arrival is greater than the time at which the first packet would have been played out if it maintained a spacing of *(X+b)* with the end of the previous talkspurt, then the time at which the packet is played out is equal to the greater of the arrival time of the first packet of the next talkspurt or *(X+b).*

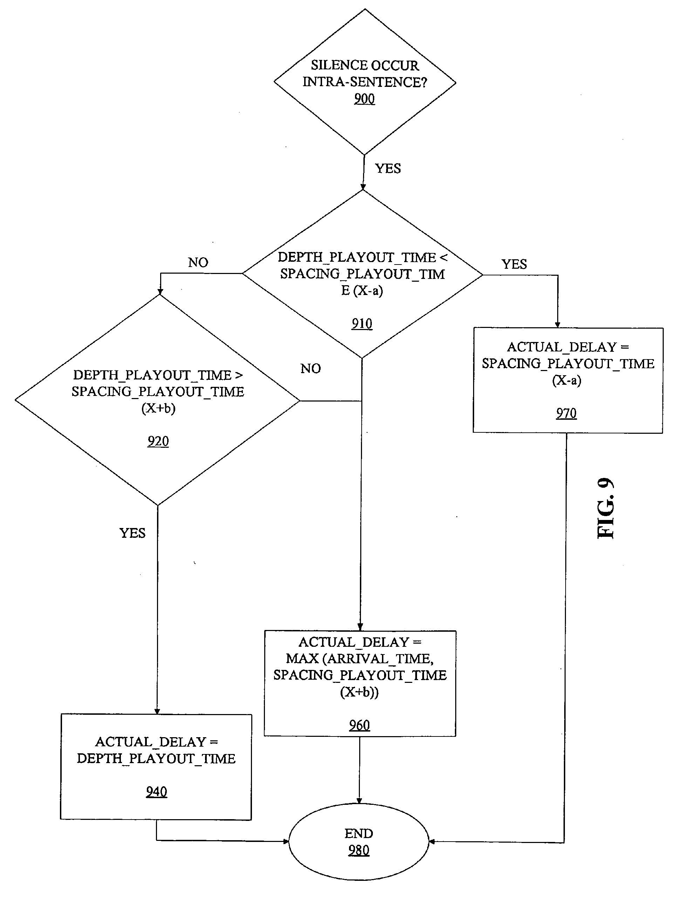

The above method is illustrated further in the flowchart of FIG. 9. In block 900, it is determined whether the period of silence occurs within a sentence. If it does not, the process returns to block 900. If the silence period occurs within a sentence, the process continues to block 910 where it is determined if *depth_playout_time* is less than *spacing_playout_time(X-a).* If so, then the actual delay applied to the silence is equal to the value of *(X-a)* at block 970. Otherwise, the process continues to block 920 where it is determined whether *depth_playout_time* is greater than or equal to *spacing_playout_time(X+b).* If so, the process continues to block 940 and the actual delay applied to the silence is equal to the value of *depth_playout_time.* The process ends at block 980. Returning now to block 920, if it is determined that *depth_playout_time* is not greater than or equal to *spacing_playout_time(X+b),* the actual delay applied to the silence is equal to the greater of *arrival_time,* and *spacing_playout_time(X+b).* The process ends at block 980.

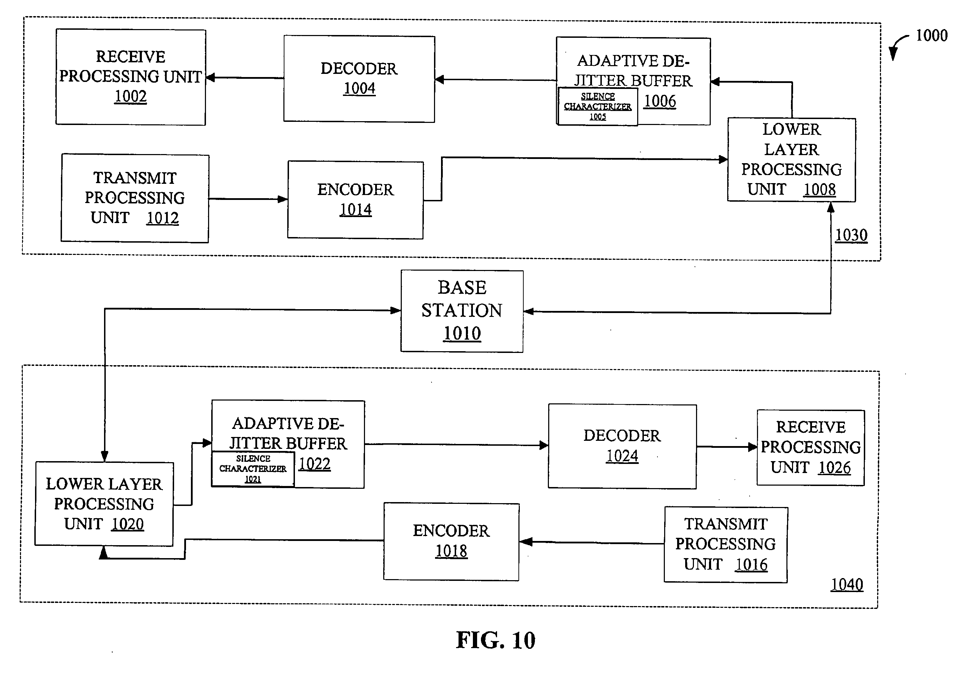

FIG. 10 is a block diagram of a system including two terminals, ATs 1030, 1040 communicating through a network element, here BS 1010. In AT 1030, transmit processing unit 1012 transmits voice data to an encoder 1014 which digitizes the voice data and sends the packetized data to lower layer processing unit 1008. Packets are then sent to BS 1010. When AT 1030 receives data from BS 1010, the data is first processed in the lower layer processing unit 1008, from which packets of data are provided to an adaptive de-jitter buffer 1006. Silence may be characterized as inter-sentence or intra-sentence either inside the de-jitter buffer or as part of a separate module, for instance in a silence characterizer 1005. In an example, silence characterizer 1005 determines whether silence periods occur intra-sentence or inter-sentence. If the silence occurs inter-sentence, the silence period may be expanded or compressed, e.g, as disclosed in co-pending application '931 "METHOD AND APPARATUS FOR AN ADAPTIVE DE-JITTER BUFFER," filed August 30, 2005 and assigned to the assignee of the present disclosure. The behavior of AT 1030 is similar to that of AT 1040. AT 1040 transmits data on a path from transmit processing unit 1016 to encoder 1018 to lower layer processing unit 1020 and finally to BS 1010. AT 1040 receives data on a path from lower layer processing unit 1020 to adaptive de-jitter buffer 1022 and silence characterizer 1021 to decoder 1024 to receive processing unit 1026. Further processing is not illustrated but may affect the playback of data, such as voice, and may involve audio processing, screen displays, etc.

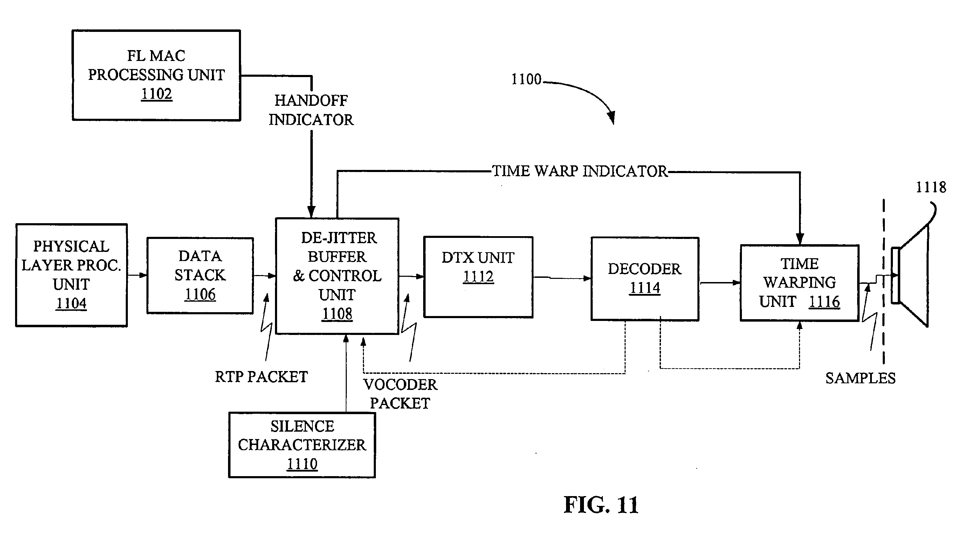

FIG. 11 is a block diagram of a portion of a receiver in a communication system incorporating an example of the disclosed invention. The physical layer processing unit 1104 provides data to the data stack 1106. The data stack 1106 outputs packets to the de-jitter buffer and control unit 1108. Silence characterizer 1110 determines whether the detected silence periods occur intra-sentence or inter-sentence. If the silence occurs intra-sentence, the de-jitter buffer maintains the silence as disclosed in the examples of the present invention. The forward link (FL) medium access control (MAC) processing unit 1102 provides a handoff indication to de-jitter buffer and control unit 1108. The MAC layer implements protocols for receiving and sending data on the physical layer, i.e., over the air. The MAC layer may include security, encryption, authentication, and connection information. In a system supporting IS-856, the MAC layer contains rules governing the Control Channel, the Access Channel, as well as the Forward and Reverse Traffic Channels.

During silence intervals, packets are sent from adaptive de-jitter buffer and control unit 1108 to a discontinuous transmission (DTX) unit 1112, wherein DTX unit 1112 provides background noise information to decoder 1114. The packets provided by the de-jitter buffer and control unit 1108 are ready for decode processing and may be referred to as vocoder packets. The decoder 1114 decodes the packets. In another aspect of the present disclosure, a time warping unit may be enabled to time warp speech packets as disclosed in application '931 "METHOD AND APPARATUS FOR AN ADAPTIVE DE-JITTER BUFFER," filed August 30, 2005 and assigned to the assignee of the present disclosure. Pulse code modulated (PCM) speech samples are provided to the time warping unit 1116 from decoder 1114. Time warping unit 1116 may receive a time warping indicator from de-jitter buffer and control unit 1108. The indicator may indicate expand, compress, or no warping of speech packets as disclosed in the abovementioned application for patent.

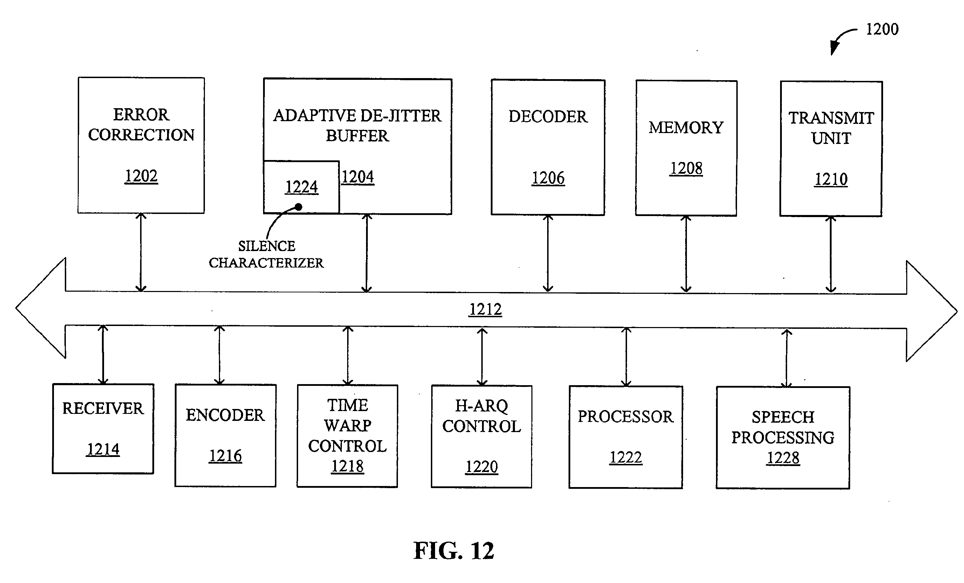

FIG. 12 is a block diagram illustrating an access terminal (AT) according to one example, including an adaptive de-jitter buffer 1204 and silence characterizer unit 1224. In one example, the de-jitter buffer includes the silence characterizer unit 1224 as illustrated in FIG. 12. In another example, the de-jitter buffer 1204 and silence characterizer unit 1224 are separate elements. De-jitter buffer 1204, time warp control unit 1218, receive circuitry 1214, silence characterizer unit 1224, control processor 1222, memory 1208, transmit circuitry 1210, decoder 1206, H-ARQ control 1220, encoder 1216, speech processing 1228, error correction 1202 may be coupled together as shown in the preceding examples. In addition they may be coupled together via communication bus 1212 shown in FIG. 12.

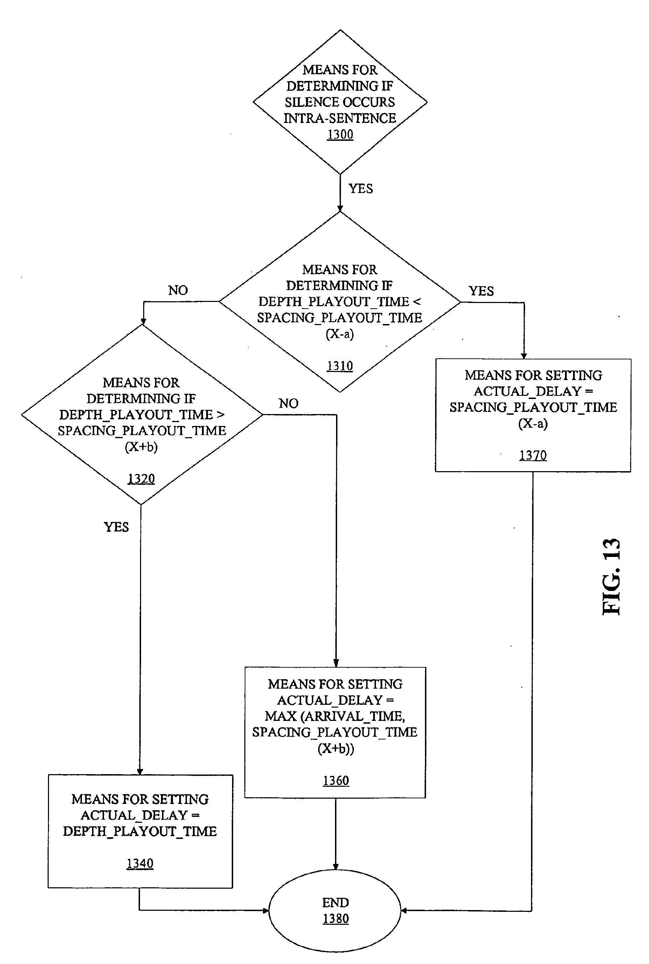

The method of FIG. 9 described above may be performed by corresponding means plus function blocks illustrated in FIG. 13. In other words, blocks 900 to 980 illustrated in FIG. 9 correspond to means plus function blocks 1300 to 1380 illustrated in FIG. 13.

While the specification describes particular examples of the present invention, those of ordinary skill can devise variations of the present invention without departing from the inventive concept. For example, the teachings herein refer to circuit-switched network elements but are equally applicable to packet-switched domain network elements. Also, the teachings herein are not limited to authentication triplet pairs but can also be applied to use of a single triplet including two SRES values (one of the customary format and one of the newer format disclosed herein).

Those skilled in the art will understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Those skilled in the art will further appreciate that the various illustrative logical blocks, modules, circuits, methods and algorithms described in connection with the examples disclosed herein may be implemented as electronic hardware, computer software, or combinations of both. To clearly illustrate this interchangeability of hardware and software, various illustrative components, blocks, modules, circuits, methods and algorithms have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention.

The various illustrative logical blocks, modules, and circuits described in connection with the examples disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The methods or algorithms described in connection with the examples disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. A storage medium may be coupled to the processor such that the processor can read information from, and write information to, the storage medium. In the alternative, the storage medium may be integral to the processor. The processor and the storage medium may reside in an ASIC.

In one or more exemplary embodiments, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium. For example, if the software is transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. Disk and disc, as used herein, includes compact disc (CD), laser disc, optical disc, digital versatile disc (DVD), floppy disk and blu-ray disc where disks usually reproduce data magnetically, while discs reproduce data optically with lasers. Combinations of the above should also be included within the scope of computer-readable media.

The previous description of the disclosed examples is provided to enable any person skilled in the art to make or use the present invention. Various modifications to these examples will be readily apparent to those skilled in the art, and the generic principles defined herein may be applied to other examples without departing from the spirit or scope of the invention. Thus, the present invention is not intended to be limited to the examples shown herein but is to be accorded the widest scope consistent with the principles and novel features disclosed herein.

**FURTHER SUMMARY OF THE INVENTION**

1. A method comprising:

    receiving a plurality of packets;
    storing the received packets;
    determining the length of at least one silence period associated with the received plurality of packets; and
    determining a time to transmit a portion of the stored packets based on the determined length of the at least one silence period.

2. The method as in 1, wherein the received packets are stored in an adaptive de-jitter buffer.

3. The method as in 2, further comprising:

    determining if the received packets occur within a sentence.

4. The method as in 3, wherein:

    the determining if the received packets occur within a sentence further comprises determining if a largest consecutive number of received silence packets is less than a certain number.

5. The method as in 4, wherein the number is equal to ten.

6. The method as in 3, wherein:

    the determining if the received packets occur within a sentence further comprises determining if the longest of the at least one silence period associated with the received packets is shorter than a certain time frame.

7. The method as in 3, further comprising:

    if the received packets occur within a sentence, adapting the de-jitter buffer to maintain a length of originally transmitted silence period; and
    transmitting the portion of the stored packets at the maintained length.

8. The method as in 7, wherein the maintained length of silence is [X-a, X+b].

9. The method as in 8, wherein [X-a, X+b] is proportional to the length of the originally transmitted silence period.

10. The method as in 8, wherein adapting the de-jitter buffer further comprises:

    determining a de-jitter buffer delay;
    transmitting a first portion of the stored packets at a time equal to the de-jitter buffer delay; and
    transmitting a second portion of the stored packets at a time calculated based on the value [X-a, X+b].

11. The method as in 10, further comprising:

    if the de-jitter buffer delay is less than a time corresponding to (X-a), transmitting the second portion of the stored packets at a time corresponding to (X-a).

12. The method as in 10, further comprising:

if the de-jitter buffer delay is greater than or equal to a time corresponding to (X-a), and the de-jitter buffer delay is less than or equal to a time corresponding to (X+b), transmitting the second portion of the stored packets at a time corresponding to the de-jitter buffer delay.

13. The method as in 10, further comprising:

if the de-jitter buffer delay is greater than a time corresponding to (X+b), transmitting the second portion of the stored packets at a time equal to the greater of a time corresponding to the arrival time or a time corresponding to (X+b).

14. An apparatus comprising:

a receiver for receiving a plurality of packets;
a de-jitter buffer for storing the received packets; and
a silence characterizer unit for determining the length of at least one silence period associated with the stored plurality of packets, and a time to transmit a portion of the stored packets based on the determined length of the at least one silence period.

15. An apparatus comprising:

means for receiving a plurality of packets;
means for storing the received packets;
means for determining the length of at least one silence period associated with the received plurality of packets; and
means for determining a time to transmit a portion of the stored packets based on the determined length of the at least one silence period.

16. The apparatus as in 15, wherein the means for storing the received packets comprises an adaptive de-jitter buffer.

17. The apparatus as in 15, further comprising:

means for determining if the received packets occur within a sentence.

18. The apparatus as in 17, wherein the determining means comprises a de-jitter buffer means.

19. The apparatus as in 18, wherein the de-jitter buffer means further comprises a characterizer means.

20. A computer program product comprising:

computer readable medium comprising:

code for causing a computer to receive a first plurality of packets and a second plurality of packets;
code for causing the computer to store the received packets;
code for causing the computer to determine the length of at least one silence period associated with the received plurality of packets; and
code for causing the computer to determine a time to transmit a portion of the stored packets based on the determined length of the at least one silence period.

**Claims**

**1.** A method comprising:

receiving a plurality of packets at a receiver;
storing the received packets in an adaptive de-jitter buffer (106, 122) having a de-jitter buffer delay;
determining the length of at least one silence period (422) associated with the received plurality of packets, wherein the at least one silence period (422) occurs between talkspurts (420, 424) of speech;
determining if the at least one silence period (422) occurs within a sentence of speech, wherein the sentence comprises periods of silence and periods of talkspurts (420, 424); and

if the at least one silence period occurs within the sentence, then determining a silence spacing based on the length of the at least one silence period (422) and the de-jitter buffer delay, wherein if the length of the at least one silence period (422) is less than a first length, then the silence spacing is set equal to the first length, wherein if the length of the at least one silence period (422) is greater than a second length that is greater than the first length, then the silence spacing is set equal to the second length, and wherein if the length of the at least one silence period (422) is between the first length and the second length, then the silence spacing is set equal to the length of the at least one silence period (422).

2. The method as in claim 1, wherein:

the determining if the at least one silence period (422) occurs within the sentence further comprises determining if a largest consecutive number of received silence packets is less than a certain number.

3. The method as in claim 1, wherein:

the determining if the at least one silence period (422) occurs within the sentence further comprises determining if the longest of the at least one silence period (422) associated with the received packets is shorter than a certain time frame.

4. The method as in claim 1, further comprising:

if the at least one silence period (422) occurs within a sentence, adapting the de-jitter buffer (106, 122) to maintain a length of originally transmitted silence period (422).

5. The method as in claim 1, wherein the silence spacing is [X-a, X+b], where "X" is the length of the at least one silence period (422), "a" is a first predetermined length of time, and "b" is a second predetermined length of time different from "a", and wherein [X-a, X+b] is proportional to the length of the at least one silence period (422).

6. The method as in claim 4, wherein adapting the de-jitter buffer (106, 122) further comprises:

determining the de-jitter buffer delay.

7. An apparatus comprising:

means for receiving a plurality of packets;
means for storing the received packets, the means having a buffer delay;
means for determining the length of at least one silence period (422) associated with the received plurality of packets, wherein the at least one silence period (422) occurs between talkspurts (420, 424) of speech;
means for determining if the at least one silence period (422) occurs within a sentence of speech, wherein the sentence comprises periods of silence and periods of talkspurts (420, 424);
means for, if the at least one silence period (422) occurs within the sentence, determining a silence spacing based on the length of the at least one silence period (422) and the buffer delay; and
wherein if the length of the at least one silence period (422) is less than a first length, then the silence spacing is set equal to the first length, wherein if the length of the at least one silence period (422) is greater than a second length that is greater than the first length, then the silence spacing is set equal to the second length, and wherein if the length of the at least one silence period (422) is between the first length and the second length, then the silence spacing is set equal to the length of the at least one silence period (422).

8. The apparatus as in claim 7, wherein the means for storing the received packets comprises an adaptive de-jitter buffer (106, 122).

9. The apparatus as in claim 8, wherein the determining means comprises a de-jitter buffer means (106, 122), and wherein the de-jitter buffer means (106, 122) further comprises a characterizer means (1005).

10. A computer program product comprising:

computer readable medium comprising:

code for causing a computer to receive a plurality of packets;

code for causing the computer to store the received packets in an adaptive de-jitter buffer (106, 122) having a de-jitter buffer delay;

code for causing the computer to determine the length of at least one silence period (422) associated with the received plurality of packets, wherein the at least one silence period (422) occurs between talkspurts (420, 424) of speech;

code for causing the computer to determine if the at least one silence period (422) occurs within a sentence of speech, wherein the sentence comprises periods of silence and periods of talkspurts (420, 424); and

code for, if the at least one silence period (422) occurs within the sentence, causing the computer to determine a silence spacing based on the length of the at least one silence period (422) and the de-jitter buffer delay, wherein if the length of the at least one silence period (422) is less than a first length, then the silence spacing is set equal to the first length, wherein if the length of the at least one silence period (422) is greater than a second length that is greater than the first length, then the silence spacing is set equal to the second length, and wherein if the length of the at least one silence period (422) is between the first length and the second length, then the silence spacing is set equal to the length of the at least one silence period (422).

EP 2 398 197 A1

**FIG. 1**

EP 2 398 197 A1

INCOMING
PACKETS

TARGET
DE-JITTER
BUFFER
LENGTH

VOCODER
PACKET

VOCODER
PACKET

VOCODER
PACKET

VOCODER
PACKET

NEXT FOR
PLAYBACK

VOCODER
PACKET

- PRIOR ART -

**FIG. 2**

FIG. 3

FIG. 4

EP 2 398 197 A1

**FIG. 5**

SIGNAL
AMPLITUDE
(VOLTS)

S=40ms

S=20ms

S=80ms

TIME

**FIG. 6**

EP 2 398 197 A1

**FIG. 7**

SOURCE

X

| PKT 1 | PKT 2 | PKT 3 | PKT 4 | | PKT 1 | PKT 2 | PKT 3 |

$t_1$      $t_2$      $t_3$      $t_4$      $t_5$      $t_6$      $t_7$    TIME

ARRIVAL

| PKT 1 | PKT 2 | PKT 3 | PKT 4 | | PKT 1 | PKT 2 | PKT 3 |

$t_1$      $t_2$      $t_3$      $t_4$      $t_5$      $t_6$      $t_7$    TIME

DE-JITTER DELAY

(X-a)

PLAYOUT

| PKT 1 | PKT 2 | PKT 3 | PKT 4 | | PKT 1 | PKT 2 | PKT 3 |

$\Delta$    $t_1$      $t_2$      $t_3$      $t_4$      $t_5$      $t_6$      $t_7$

**FIG. 8A**

TIME

SOURCE

| PKT 1 | PKT 2 | PKT 3 | PKT 4 |

$X$

| PKT 1 | PKT 2 | PKT 3 |

$t_1$　　$t_2$　　$t_3$　　$t_4$　　　　　　　$t_5$　　$t_6$　　$t_7$　　TIME

ARRIVAL

| PKT 1 | PKT 2 | PKT 3 | PKT 4 |

| PKT 1 | PKT 2 | PKT 3 |

$t_1$　　$t_2$　　$t_3$　　$t_4$　　　　　$t_5$　　$t_6$　　$t_7$　　TIME

DE-JITTER DELAY

PLAYOUT

$(X-a)$

| PKT 1 | PKT 2 | PKT 3 | PKT 4 |

| PKT 1 | PKT 2 | PKT 3 |

$\Delta$　$t_1$　　$t_2$　　$t_3$　　$t_4$　　$(X+b)$　$t_5$　　$t_6$　　$t_7$

TIME

**FIG. 8B**

EP 2 398 197 A1

EP 2 398 197 A1

SOURCE

| PKT 1 | PKT 2 | PKT 3 | PKT 4 | $\longleftrightarrow$ X | PKT 1 | PKT 2 | PKT 3 |

$t_1$   $t_2$   $t_3$   $t_4$   $t_5$   $t_6$   $t_7$   TIME

ARRIVAL

| PKT 1 | PKT 2 | PKT 3 | PKT 4 | PKT 1 | PKT 2 | PKT 3 |

$t_1$   $t_2$   $t_3$   $t_4$   $t_5$   $t_6$   $t_7$

DE-JITTER DELAY   TIME

PLAYOUT

(X-a)

| PKT 1 | PKT 2 | PKT 3 | PKT 4 | PKT 1 | PKT 2 |

$\Delta$   $t_1$   $t_2$   $t_3$   $t_4$   (X+b)   $t_5$   $t_6$

TIME

**FIG. 8C**

```
                    SILENCE OCCUR
                    INTRA-SENTENCE?
                         900

                           │ YES


           NO       DEPTH_PLAYOUT_TIME <
                    SPACING_PLAYOUT_TIM         YES
                         E (X-a)
                           910

                                │ NO

   DEPTH_PLAYOUT_TIME >                        ACTUAL_DELAY =
   SPACING_PLAYOUT_TIME                        SPACING_PLAYOUT_TIME
        (X+b)                                       (X-a)
         920                                         970



        │ YES

                          ACTUAL_DELAY =
                          MAX (ARRIVAL_TIME,
                          SPACING_PLAYOUT_TIME
                               (X+b))
                                960

   ACTUAL_DELAY =
   DEPTH_PLAYOUT_TIME

        940
                               END
                               980
```

**FIG. 9**

22

EP 2 398 197 A1

**FIG. 10**

**FIG. 11**

EP 2 398 197 A1

1200

| ERROR CORRECTION 1202 | ADAPTIVE DE-JITTER BUFFER 1224 1204 | DECODER 1206 | MEMORY 1208 | TRANSMIT UNIT 1210 |
|---|---|---|---|---|

SILENCE CHARACTERIZER

1212

| RECEIVER 1214 | ENCODER 1216 | TIME WARP CONTROL 1218 | H-ARQ CONTROL 1220 | PROCESSOR 1222 | SPEECH PROCESSING 1228 |
|---|---|---|---|---|---|

**FIG. 12**

MEANS FOR
DETERMINING IF
SILENCE OCCURS
INTRA-SENTENCE
1300

YES

MEANS FOR
DETERMINING IF
DEPTH_PLAYOUT_TIME <
SPACING_PLAYOUT_TIME
(X-a)

1310

NO

YES

MEANS FOR SETTING
ACTUAL_DELAY =
SPACING_PLAYOUT_TIME
(X-a)

1370

MEANS FOR
DETERMINING IF
DEPTH_PLAYOUT_TIME >
SPACING_PLAYOUT_TIME
(X+b)

1320

NO

YES

MEANS FOR SETTING
ACTUAL_DELAY =
MAX (ARRIVAL_TIME,
SPACING_PLAYOUT_TIME
(X+b))

1360

MEANS FOR SETTING
ACTUAL_DELAY =
DEPTH_PLAYOUT_TIME

1340

END
1380

FIG. 13

26

Europäisches
Patentamt
European
Patent Office
Office européen
des brevets

**EUROPEAN SEARCH REPORT**

Application Number

EP 11 00 7592

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 6 282 196 B1 (LYONS TERRY GREGORY [US] ET AL) 28 August 2001 (2001-08-28)<br>* abstract *<br>* column 1, line 9 - column 2, line 4 *<br>* claims 1,6,9,12 *<br>* figure 12 * | 1-10 | INV.<br>H04L12/56 |
| A | EP 1 770 688 A (FUJITSU LTD [JP])<br>4 April 2007 (2007-04-04)<br>* abstract *<br>* page 2, paragraph 1 - page 5, paragraph 24 *<br>* claims 1,7-12 *<br>* figures 1,5 * | 1-10 | |
| A | LIANG Y J ET AL: "Adaptive playout scheduling using time-scale modification in packet voice communications",<br>2001 IEEE INTERNATIONAL CONFERENCE ON ACOUSTICS, SPEECH, AND SIGNAL PROCESSING. PROCEEDINGS. (ICASSP). SALT LAKE CITY, UT, MAY 7 - 11, 2001; [IEEE INTERNATIONAL CONFERENCE ON ACOUSTICS, SPEECH, AND SIGNAL PROCESSING (ICASSP)], NEW YORK, NY : IEEE, US,<br>vol. 3, 7 May 2001 (2001-05-07), pages 1445-1448, XP010803129,<br>ISBN: 978-0-7803-7041-8<br>* abstract *<br>* page 1445, paragraph 1. *<br>* page 1445, paragraph 2. *<br>* page 1448, paragraph 5. *<br>* figure 1 *<br>-----<br>-/-- | 1-10 | TECHNICAL FIELDS SEARCHED (IPC)<br>H04L<br>G10L<br>H04J |

The present search report has been drawn up for all claims

| Place of search | Date of completion of the search | Examiner |
|---|---|---|
| Munich | 27 October 2011 | Schrembs, Gerd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 11 00 7592

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | DE 100 53 065 A1 (SIEMENS INF & COMM NETWORKS [US]) 30 August 2001 (2001-08-30) * abstract * * column 1, line 13 - column 2, line 46 * * column 3, line 8 - line 44 * * claims 1,4,5,9 * * figures 5-8 * | 1-10 | |
| A | PINTO J ET AL: "An algorithm for playout of packet voice based on adaptive adjustment of talkspurt silence periods", LOCAL COMPUTER NETWORKS, 1999. LCN '99. CONFERENCE ON LOWELL, MA, USA 18-20 OCT. 1999, LOS ALAMITOS, CA, USA,IEEE COMPUT. SOC, US, 18 October 1999 (1999-10-18), pages 224-231, XP010358540, ISBN: 978-0-7695-0309-7 * abstract * * page 224, paragraph 1. - page 225, column 2, line 16, paragraph 2. * * page 231, paragraph 5. * * figures 1-3 * | 1-10 | |
| A | CHOUDHURY G L ET AL: "Design and analysis of optimal adaptive de-jitter buffers", COMPUTER COMMUNICATIONS, ELSEVIER SCIENCE PUBLISHERS BV, AMSTERDAM, NL, vol. 27, no. 6, 1 April 2004 (2004-04-01), pages 529-537, XP004496605, ISSN: 0140-3664 * abstract * * pages 529-530, paragraph 1. * * page 536, paragraph 5. * | 1-10 | TECHNICAL FIELDS SEARCHED (IPC) |

The present search report has been drawn up for all claims

| Place of search | Date of completion of the search | Examiner |
|---|---|---|
| Munich | 27 October 2011 | Schrembs, Gerd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 00 7592

This annex lists the patent family members relating to the patent documents cited in the above-mentioned European search report.
The members are as contained in the European Patent Office EDP file on
The European Patent Office is in no way liable for these particulars which are merely given for the purpose of information.

27-10-2011

| Patent document cited in search report | | | Publication date | Patent family member(s) | | Publication date |
|---|---|---|---|---|---|---|
| US 6282196 | B1 | | 28-08-2001 | NONE | | |
| EP 1770688 | A | | 04-04-2007 | WO 2006008810 A1 | | 26-01-2006 |
| | | | | JP 4460580 B2 | | 12-05-2010 |
| | | | | US 2007118363 A1 | | 24-05-2007 |
| DE 10053065 | A1 | | 30-08-2001 | GB 2360918 A | | 03-10-2001 |
| | | | | US 6683889 B1 | | 27-01-2004 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 21593105 A